# EUROPÄISCHE PATENTSCHRIFT

(11) **EP 1 683 670 B1**
(45) Veröffentlichungstag und Bekanntmachung des Hinweises auf die Patenterteilung: **20.02.2008**
(21) Anmeldenummer: 05027035.4
(22) Anmeldetag: 10.12.2005
(51) Int. Cl.: B60J 7/14, B60J 7/20

(54) **Hardtop-Verdeck eines Cabriolet-Fahrzeugs**
Retractable hard top roof for a convertible car
Toit rigide repliable pour un véhicule découvrable

(30) Priorität: 20.01.2005 DE 102005002613
(43) Veröffentlichungstag der Anmeldung: 26.07.2006
(73) Patentinhaber: Wilhelm Karmann GmbH, 49084 Osnabrück (DE)
(72) Erfinder: Russke, Klaus, 49143 Bissendorf (DE); Weissmüller, Olaf, 49565 Bramsche (DE)

(56) Entgegenhaltungen:
- WO-A-20/05082658
- DE-U1- 20 310 115
- FR-A- 2 694 245
- US-A1- 2003 184 116

## Beschreibung

Die Erfindung betrifft ein Hardtop-Verdeck eines Cabriolet-Fahrzeugs mit im Wesentlichen zwei Dachsegmenten, wobei ein Heck-Dachsegment und ein in Verdeckschließstellung zwischen diesem und einem Windschutzscheibenrahmen angeordnetes Front-Dachsegment vorgesehen sind, und wobei das Heck-Dachsegment über einen Verdeckmechanismus gelenkig mit einer Fahrzeugkarosserie und mit dem Front-Dachsegment verbunden ist.

Im Allgemeinen besteht bei Cabriolet-Fahrzeugen mit einem sogenannten Hardtop-Verdeck mit im Wesentlichen formstabilen Dachsegmenten die Problematik einer großen Ablagehöhe bzw. Packhöhe, welche die bei geöffnetem Zustand des Verdecks zusammengefalteten bzw. zusammengeklappten Dachsegmente in einem Verdeckablageraum beanspruchen. Die Packhöhe beeinflusst in erheblichem Maße nicht nur die gestalterische Freiheit im Heckbereich des Fahrzeugs, sondern auch die mögliche Dimensionierung eines Kofferraums. Bei einer vertikalen Stapelung von Dachsegmenten in dem Verdeckablageraum verbleibt in der Regel nur ein sehr geringer Stauraum, welcher für Nutzer des Fahrzeugs häufig unbefriedigend ist.

Eine Möglichkeit der Verringerung der Packhöhe besteht in einer gleichsinnigen Ablage der Dachsegmente, so dass diese in Ablageposition in die gleiche Richtung gewölbt sind, jedoch läßt sich hiermit insbesondere bei einem zweiteiligen Hardtop-Verdeck nur geringfügig mehr Stauraum gewinnen.

Eine solche Lösung ist z. B. aus der DE 203 10 115 U1 bekannt.

Aus der WO 00/73096 A1 ist ein abklappbares Verdeck bekannt, welches ein vorderes Dachelement und ein rückwärtiges Dachelement sowie gegebenenfalls dazwischen angeordnete weitere Dachelemente aufweist, wobei bei drei Dachelementen vorgesehen ist, dass zur Unterbringung dieser Dachelemente in einem Verdeckablageraum ein Dachelement senkrecht in Fahrzeughöhe und die übrigen beiden Dachelemente daneben waagrecht übereinander angeordnet werden.

Auch bei dieser Anordnung der Dachelemente in einem Verdeckablageraum steht nur ein geringer Kofferraum bzw. Stauraum für beispielsweise Gepäck zur Verfügung, da bei einer in der WO 00/73096 A1 offenbarten Anordnung von zwei waagrechten Dachelementen neben einem senkrechten Dachelement ein kompakter, großen Bauraum erfordernder Block im Heckbereich des Fahrzeugs gebildet wird.

Des Weiteren ist die Gestaltung des Antriebs der einzelnen Dachelemente bei dieser bekannten Lösung aufwändig und kostenintensiv.

Die US 2003/0184116 A1 offenbart ein Hardtop-Verdeck eines Cabriolet-Fahrzeuges, welches wenigstens ein Front-Dachelement aufweist, das an ein Heck-Dachelement angelenkt ist, wobei das Heck-Dachelement schwenkbar an einer Fahrzeugkarosserie angebunden ist. Die Dachelemente sind dabei derart in eine abgelegte Position schwenkbar, dass das Frontdachelement in Ablageposition eine im Wesentlichen vertikale Position hinter dem Rücksitz einnimmt, während das Heck-Dachsegment im Wesentlichen waagrecht und heckwärts des Front-Dachelements derart angeordnet ist, dass es eine obere Begrenzung eines Kofferraums bildet. Dabei befindet sich das waagrecht gelagerte Heck-Dachelement unter einem Deckel, welcher die Heckoberfläche bildet.

Je nach Gestaltung des Heck-Dachelements und des über ihm angeordneten Deckels kann bei einer solchen Lösung der verfügbare Stauraum in vertikaler Richtung nachteilhafterweise stark eingeschränkt sein.

Es ist Aufgabe der vorliegenden Erfindung, ein Verdeck für ein Cabriolet-Fahrzeug der eingangs näher beschriebenen Art zu schaffen, welches bei einer einfachen konstruktiven Gestaltung einen vergrößerten Stauraum im Heckbereich des Cabriolet-Fahrzeuges im abgelegten Zustand des Verdecks bietet.

Erfindungsgemäß wird diese Aufgabe bei einem Verdeck für ein Cabriolet-Fahrzeug der eingangs genannten Art durch die im kennzeichnenden Teil des Patentanspruches 1 genannten Merkmale gelöst.

Die Erfindung sieht somit ein Hardtop-Verdeck eines Cabriolet-Fahrzeugs vor, welches mit einem Heck-Dachsegment und einem in Verdeckschließstellung zwischen diesem und einem Windschutzscheibenrahmen angeordneten Front-Dachsegment ausgebildet ist, wobei das Heck-Dachsegment gelenkig mit einer Fahrzeugkarosserie und mit dem Front-Dachsegment verbunden ist, und wobei bei einer Überführung von einer Verdeckschließstellung in eine Verdecköffnungsstellung das Heck-Dachsegment um seinen heckseitigen Rand hochverschwenkt wird, das Front-Dachsegment um seinen an das Heck-Dachsegment grenzenden Rand herabgeklappt wird und die Dachsegmente zusammen heckwärts derart in eine abgesenkte Position verlagert werden, dass das Front-Dachsegment in Verdecköffnungsstellung im Wesentlichen senkrecht mit seinem dem Heck-Dachsegment abgewandten Rand entgegen einem Fahrzeugboden hinter einer Sitzanordnung angeordnet ist und das Heck-Dachsegment im Wesentlichen waagrecht und heckwärts des Front-Dachsegments ausgerichtet angeordnet ist, wobei die somit L-förmig angeordneten Dachsegmente eine fahrzeugfrontseitige und obere Begrenzung eines Kofferraums bilden. Erfindungsgemäß ist hierbei eine Oberseite des Heck-Dachsegments bei dessen Positionierung in Verdecköffnungsstellung Teil einer Heckoberfläche.

Eine solche Lösung hat den Vorteil, dass in Verdecköffnungsstellung auch bei einer kurzen Heckpartie des Cabriolet-Fahrzeuges heckwärts des Front-Dachsegments und unter dem Heck-Dachsegment ein von der Fahrzeugheckseite beladbarer Kofferraum bzw. Stauraum zur Verfügung steht. Der verfügbare Stauraum ist dabei vorteilhafterweise mit einer großen Höhe realisierbar, da die Abdeckung des Verdecks durch einen entsprechend großen, separaten Verdeckkastendeckel entfallen kann.

Da die Höhe dieses Kofferraums wenigstens der Länge des Front-Dachsegments abzüglich der Dicke des Heck-Dachsegments entspricht, ist der erfindungsgemäß bereitgestellte Kofferraum, welcher bei einem Cabriolet-Fahrzeug mit einer entsprechend großen Heckpartie auch Teil eines größeren heckseitig anschließenden Stauraums sein kann, ausreichend zur Unterbringung zumindest kleinerer Gepäckstücke.

Bezüglich der Dimensionierung der Dachsegmente und ihrer erfindungsgemäßen Anordenbarkeit ist es vorteilhaft, wenn die Dachsegmente zur Bedeckung eines zweisitzigen bzw. nur eine Sitzreihe aufweisenden Fahrgastraumes ausgelegt sind. Dabei kann das Front-Dachsegment entsprechend kurz, vorzugsweise kürzer als das Heck-Dachsegment ausgelegt werden, um es mühelos senkrecht hinter der Sitzanordnung plazieren zu können.

Die Gestaltung eines Verdeckmechanismus zum Anheben bzw. Abklappen und Verlagern der Dachsegmente in Heckrichtung ist einfach und mit nur wenige Teile aufweisenden, an sich bekannten Gelenk- bzw. Scharnierverbindungen ausführbar.

Hinsichtlich der Positionierung des Heck-Dachsegments in Verdecköffnungsstellung ist es vorteilhaft, wenn dieses in Verdecköffnungsstellung waagrecht wenigstens annähernd in Fahrzeugbrüstungshöhe angeordnet ist. Damit ist eine ausreichende Höhe für den darunter angeordneten Kofferraum gewährleistet und das Heck-Dachsegment kann mit angrenzenden Fahrzeugbauteilen eine sowohl der Versteifung des Fahrzeugs dienliche als auch für die Formgebung der Karosserie vorteilhafte Verbindung eingehen.

Eine vorteilhafte Ausgestaltung der Erfindung kann vorsehen, einen als Verdeckrandabdeckung und somit einen nicht von dem Heck-Dachsegment bedeckten Bereich des Fahrzeugs abdeckenden und einen Übergang zu dem Heck-Dachsegment abdichtenden Verdeckkastendeckel vorzusehen, welcher vor Einleitung einer Öffnungsbewegung der Dachsegmente hochverschwenkt und nach Beendigung der Öffnungsbewegung der Dachsegmente zurückverschwenkt wird, wobei der Verdeckkastendeckel in Verdecköffnungsstellung mit der Oberseite des Heck-Dachsegments die Heckoberfläche bildet.

Das Heck-Dachsegment des Hardtop-Verdecks nach der Erfindung ist bei einer konstruktiv einfachen, robusten und eine günstige Bewegungsführung des Verdecks während einer Verdeckschließ- oder Verdecköffnungsbewegung erlaubenden Ausführung mit der Fahrzeugkarosserie bzw. einem hieran festgelegten Hauptlager über einen Mehrgelenk-Mechanismus, insbesondere einen Viergelenk-Mechanismus oder einen Fünfgelenk-Mechanismus verbunden.

Für die gelenkige Verbindung des Heck-Dachsegments mit dem Front-Dachsegment bietet sich eine hinsichtlich des Bauaufwandes einfache Scharnierverbindung an, welche z. B. als eine sogenannte Direkt-Scharnier-Kinematik ausgeführt sein kann, wie sie aus der DE 196 23 036 A1 bekannt ist, auf welche vollinhaltlich Bezug genommen wird.

Für das erfindungsgemäße Hardtop-Verdeck kann eine Antriebseinrichtung mit einem das Heck-Dachsegment und das Front-Dachsegment gemeinsam antreibenden Antriebsorgan vorgesehen sein.

Alternativ kann die Antriebseinrichtung ein erstes, dem Heck-Dachsegment zugeordnetes Antriebsorgan und ein zweites, dem Front-Dachsegment zugeordnetes Antriebsorgan aufweisen, womit eine unabhängige, zeitlich und hinsichtlich der von den Dachsegmenten bei einer Verdeckbewegung durchzogenen Kurvenbahnen optimierte Ansteuerung der Dachsegmente möglich ist.

Für die Ausgestaltung der Antriebsorgane eignet sich bevorzugt die Verwendung von Hydraulikzylindern, jedoch kann auch jeder andere hydraulische, pneumatische oder elektrisch betriebene Aktuator Anwendung finden. Die Verwendung von elektrischen Aktuatoren, welche beispielsweise einzelnen Gelenken zugeordnete und mit diesen z. B. über Gelenkwellen verbundene Elektromotoren sein können, ermöglicht dabei eine weitgehende Unabhängigkeit von konstruktiven Gegebenheiten und Geometrien bei der Bewegungsgestaltung.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel eines Hardtop-Verdecks nach der Erfindung ist in der Zeichnung schematisch vereinfacht dargestellt und wird in der nachfolgenden Beschreibung näher erläutert. Es zeigt:
- Fig. 1: eine schematische Seitenansicht eines Cabriolet-Fahrzeuges mit einem erfindungsgemäßen Hardtop-Verdeck, wobei sich das Verdeck in Schließstellung befindet;
- Fig. 2: eine weitere schematische Seitenansicht des mit einem erfindungsgemäßen Hardtop-Verdeck ausgestatteten Cabriolet-Fahrzeuges gemäß Fig. 1, wobei sich das Verdeck in Öffnungsstellung befindet; und
- Fig. 3: eine vereinfachte, ausschnittsweise Perspektivdarstellung einer Scharnierverbindung zwischen einem Heck-Dachsegment und einem Front-Dachsegment des Hardtop-Verdecks gemäß Fig. 1 und Fig. 2.

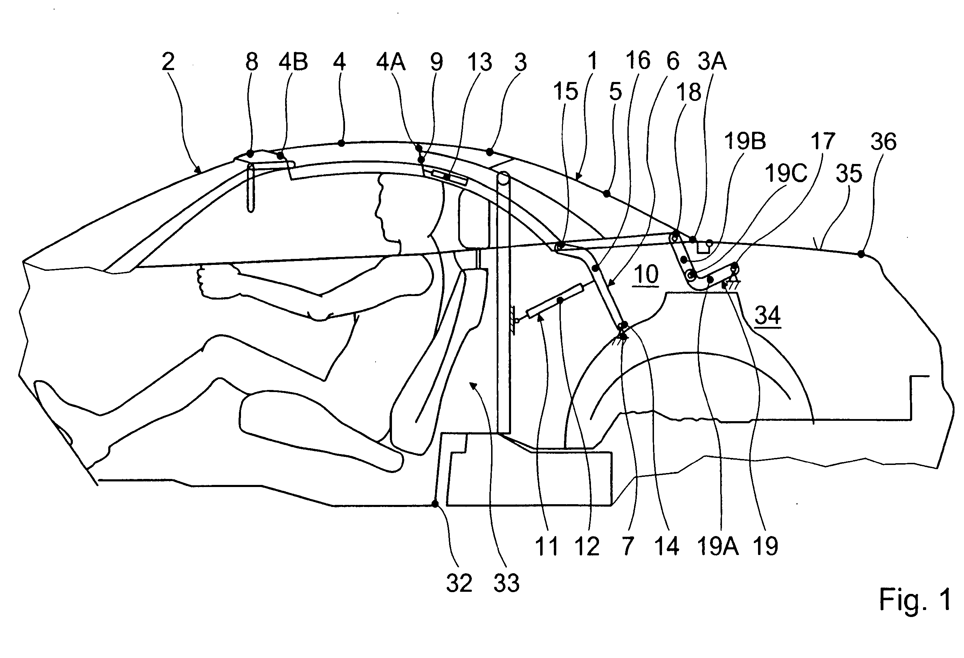

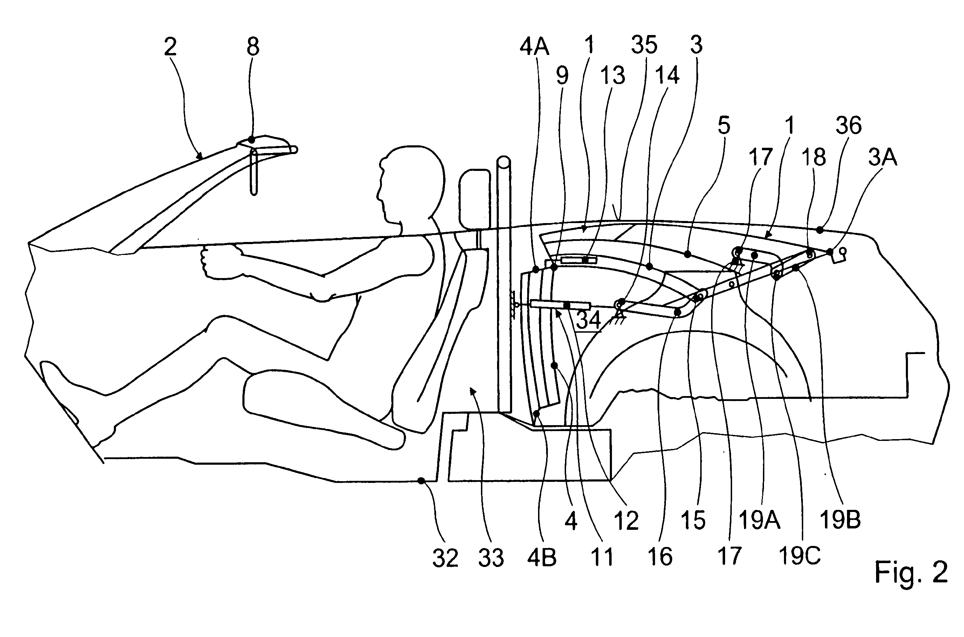

In den Fig. 1 und Fig. 2 ist jeweils ein zweiteiliges Hardtop-Verdeck 1 für ein schematisch angedeutetes, zweisitziges Cabriolet-Fahrzeug 2 gezeigt.

Das Verdeck 1 ist mit zwei im Wesentlichen formstabilen, ein so genanntes Hardtop bildenden Dachsegmenten 3, 4 ausgebildet, wobei ein Heck-Dachsegment 3 mit einem Rückfenster 5 über eine vorliegend als Fünfgelenk-Mechanismus ausgebildete gelenkige Verbindung 6 mit einem an der Fahrzeugkarosserie festgelegten Hauptlager 7 verbunden ist und ein in Verdeckschließstellung zwischen dem Heck-Dachsegment 3 und einem Windschutzscheibenrahmen 8 angeordnetes Front-Dachsegment 4 vorgesehen ist, welches mit dem Heck-Dachsegment 3 über eine Scharnierverbindung 9 verbunden ist.

Die in den Fig. 1 und Fig. 2 gezeigten Elemente des Verdecks 1 sind schematisiert zur Verdeutlichung ihrer funktionalen Verbindung gezeigt, wobei bei der vorliegenden Ausführung des Verdecks 1 die hier jeweils im Bereich einer Fahrzeuglängsseite befindlichen Verdeckelemente symmetrisch zu einer Fahrzeuglängsachse im Bereich der gegenüberliegenden Fahrzeuglängsseite in gleicher Bauteilanordnung vorgesehen sind.

Hiervon abweichend kann in weiteren Ausführungen bei Vorsehen entsprechender Synchronisiermaßnahmen gegebenenfalls auch eine einseitige Anordnung eines oder mehrerer Elemente des Verdecks vorgesehen sein.

Die Dachsegmente 3, 4 sind zwischen der in Fig. 1 gezeigten verdeckschließstellung, in der das Front-Dachsegment 4 an dem Windschutzscheibenrahmen 8 anliegt und der in Fig. 5 gezeigten Verdecköffnungsstellung, bei der die Dachsegmente 3, 4 in einem hinsichtlich seiner Lage angedeuteten Verdeckablageraum 10 abgelegt sind, mittels des durch den Fünfgelenk-Mechanismus 6 zwischen dem Heck-Dachsegment 3 und dem Hauptlager 7, der Scharnierverbindung 9 und einer die Dachsegmente 3, 4 antreibenden Antriebseinrichtung 11 gebildeten Verdeckmechanismus vollautomatisch verschwenkbar.

Die Antriebseinrichtung 11 weist dabei ein erstes Antriebsorgan 12 auf, das vorliegend an der gelenkigen Verbindung 6 zwischen dem Heck-Dachsegment 3 und dem Hauptlager 7 angreift und bei der gezeigten Ausführung als ein gelenkig an der Karosserie gelagerter Hydraulikzylinder ausgeführt ist. Bei einer alternativen Ausführung kann das erste Antriebsorgan statt an der gelenkigen Verbindung 6 auch direkt an dem Heck-Dachsegment angelenkt sein.

Des Weiteren weist die Antriebseinrichtung 11 ein zweites Antriebsorgan 13 auf, welches vorliegend wiederum als ein Hydraulikzylinder ausgeführt ist, der an dem Heck-Dachsegment 3 stabil abgestützt ist und an der Scharnierverbindung 9, welche das Heck-Dachsegment 3 mit dem Front-Dachsegment 4 verbindet, zum Antrieb des Front-Dachsegments 4 angreift.

Zur Ausbildung des Fünfgelenk-Mechanismus 6, welcher das Heck-Dachsegment 3 mit dem Hauptlager 7 verbindet, ist zwischen einem ersten Gelenkpunkt 14 des Fünfgelenk-Mechanismus 6 an dem Hauptlager 7 und einem zweiten Gelenkpunkt 15 des Fünfgelenk-Mechanismus 6 an dem Heck-Dachsegments 3 ein erster Schwenkhebel 16 angeordnet, an dem der Hydraulikzylinder 12 angreift. Annähernd parallel zu diesem ersten Schwenkhebel 16 ist zwischen einem dritten Gelenkpunkt 17 des Fünfgelenk-Mechanismus 6 an dem Hauptlager 7 und einem vierten Gelenkpunkt 18 des Fünfgelenk-Mechanismus 6 an dem Heck-Dachsegment 3 ein zweiteiliger Schwenkhebel 19 angeordnet, welcher sich aus einem ersten Teilhebel 19A und einem zweiten Teilhebel 19B zusammensetzt, die über ein den fünften Gelenkpunkt des Fünfgelenk-Mechanismus 6 bildendes Gelenk 19C miteinander verbunden sind.

Anstelle des hier beschriebenen Fünfgelenk-Mechanismus 6 kann in einer alternativen Ausführung je nach den geometrischen Gegebenheiten vom Fachmann auch ein Viergelenk-Mechanismus gewählt werden, bei dem der bei der gezeigten Ausführung zweiteilige Schwenkhebel 19 einteilig ausgeführt ist. Gegebenenfalls kann auch ein Mehrgelenk-Mechanismus mit mehr als fünf Gelenkpunkten vorteilhaft sein.

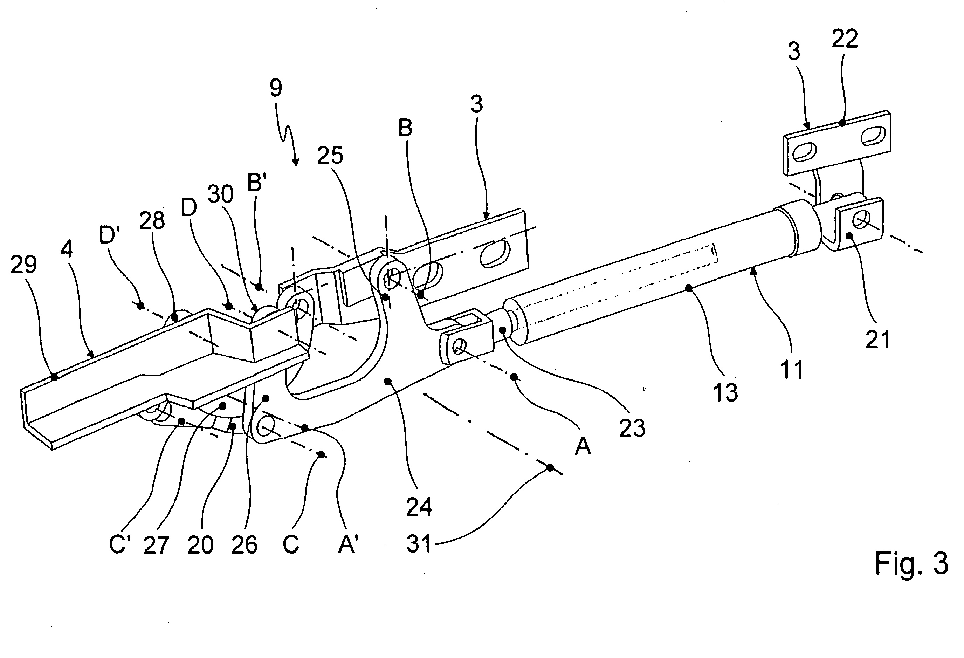

Die in Fig. 3 näher dargestellte Scharnierverbindung 9 zwischen dem Heck-Dachsegment 3 und dem Front-Dachsegment 4 ist als eine sogenannte Direkt-Scharnier-Kinematik ausgebildet, wobei die Scharnierverbindung 9 eine unmittelbar durch das zweite Antriebsorgan 13 der Antriebseinrichtung 11 betätigbare Gelenkverbindung ist.

Die Scharnierverbindung 9, welche zwischen den Dachsegmenten 3, 4 vorliegend einen Schwenkwinkel von 180° einstellen kann, weist mehrere, eine Gelenkkette bildenden, zueinander versetzte Schwenkgliedern 30 auf, wobei als Schwenkglieder 30 zwei jeweils vier Verbindungsachsen A, B, C, D und A', B', C', D' aufweisende Viergelenke vorgesehen sind, deren Einzelelemente gemeinsam in der Gelenkverbindungskette wirksam sind. Die beiden Viergelenke A, B, C, D und A', B', C', D' sind dabei vorliegend über einen Querlenker 20 verbunden, mit dem eine Schubbewegung des zugeordneten Antriebsorgans 13 zwischen den beiden Viergelenken gekoppelt ist.

Das als Hydraulikzylinder 13 ausgebildete Antriebsorgan der Scharnierverbindung 9 ist zylinderseitig über eine ein Gelenkprofil 21 aufweisende Halteplatte 22 am Heck-Dachsegment 3 befestigt und greift mit einer Schubstange 23 an einer Verbindungsachse eines Gabellenkers 24 an, dessen erster Schenkel 25 am Heck-Dachsegment 3 in der Verbindungsachse B abgestützt ist und dessen zweiter Schenkel 26 einseitig direkt am Front-Dachsegment 4 im Bereich der Achse D abgestützt ist. Der Gabellenker ist weiters im Bereich seines zweiten Schenkels 26 in der Verbindungsachse C mit dem zweiten Viergelenk über den Querlenker 20 verbunden.

Das zweite Viergelenk A', B', C', D' weist einen im mittleren Bereich des Querlenkers 20 im Bereich der Achse A' angreifenden sowie am Heck-Dachsegment 3 in der Achse B' abgestützten Bogenschwingteil 27 auf, und im Bereich der Achse C' ist am Querlenker 20 ein mit dem Front-Dachsegment 4 im Bereich der Achse D' verbundener Schwinghebel 28 vorgesehen.

Im Bereich des Front-Dachsegments 4 sind die Verbindungsachsen D, D' an einer Winkelplatte 29 vorgesehen. Die Verbindungsgelenke B, B' und D, D' sind jeweils axial beabstandet zueinander bezüglich einer Fahrzeugquerachse bzw. Schwenkachse 31 angeordnet, so dass die Scharnierverbindung 9 nur einen geringen Bauraum erfordert.

Mit dem beschriebenen Verdeckmechanismus sind die Dachsegmente 3, 4 bei einer Überführung von einer Verdeckschließstellung in eine Verdecköffnungsstellung derart ansteuerbar, dass das Heck-Dachsegment 3 um seinen heckseitigen Rand 3A hochverschwenkt wird, das Front-Dachsegment 4 um seinen an das Heck-Dachsegment (3) grenzenden Rand 4A in Fahrzeugfrontrichtung L-artig herabgeklappt wird und die Dachsegmente 3, 4 zusammen heckwärts derart in eine abgesenkte Position verlagert werden, dass das Front-Dachsegment 4 in Verdecköffnungsstellung im Wesentlichen senkrecht mit seinem dem Heck-Dachsegment 3 abgewandten Rand 4B entgegen einem Fahrzeugboden 32 hinter einer Sitzanordnung 33 angeordnet ist und das Heck-Dachsegment 4 im Wesentlichen waagrecht und heckwärts des Front-Dachsegments 3 ausgerichtet angeordnet ist.

Dabei bilden die somit L-förmig angeordneten Dachsegmente 3, 4 eine fahrzeugfrontseitige und obere Begrenzung eines Kofferraums 34, wobei die Oberseite des Heck-Dachelements 3 derart gestaltet ist, dass diese gleichzeitig einen Teil einer Heckoberfläche 35 bildet.

Einen weiteren Teil der Heckoberfläche 35 in Verdecköffnungsstellung bildet vorliegend ein als Verdeckrandabdeckung ausgebildeter so genannter Verdeckkastendeckel 36, welcher vor Einleitung einer Öffnungsbewegung der Dachsegmente 3, 4 um einen heckseitigen Rand hochverschwenkt und nach Beendigung der Öffnungsbewegung der Dachsegmente 3, 4 in eine die Oberfläche des Heck-Dachsegments 3 heckseitig und seitlich umgebende Position zurückverschwenkt wird.

### BEZUGSZEICHEN

- 1: Verdeck
- 2: Cabriolet-Fahrzeug
- 3: Heck-Dachsegment
- 3A: heckseitiger Rand des Heck-Dachsegments
- 4: Front-Dachsegment
- 4A: heckseitiger Rand des Front-Dachsegments
- 4B: frontseitiger Rand des Front-Dachsegments
- 5: Rückfenster
- 6: gelenkige Verbindung, Fünfgelenk-Mechanismus
- 7: Hauptlager
- 8: Windschutzscheibenrahmen
- 9: Scharnierverbindung
- 10: Verdeckablageraum
- 11: Antriebseinrichtung
- 12: erstes Antriebsorgan, Hydraulikzylinder
- 13: zweites Antriebsorgan, Hydraulikzylinder
- 14: erster Gelenkpunkt des Fünfgelenk-Mechanismus
- 15: zweiter Gelenkpunkt des Fünfgelenk-Mechanismus
- 16: erster Schwenkhebel des Fünfgelenk-Mechanismus
- 17: dritter Gelenkpunkt des Fünfgelenk-Mechanismus
- 18: vierter Gelenkpunkt des Fünfgelenk-Mechanismus
- 19: zweiteiliger Schwenkhebel des Fünfgelenk-Mechanismus
- 19A: erster Teilhebel
- 19B: zweiter Teilhebel
- 19C: fünfter Gelenkpunkt des Fünfgelenk-Mechanismus
- 20: Querlenker
- 21: Gelenkprofil
- 22: Halteplatte
- 23: Schubstange
- 24: Gabellenker
- 25: Schenkel des Gabellenkers
- 26: Schenkel des Gabellenkers
- 27: Bogenschwingteil
- 28: Schwinghebel
- 29: Winkelplatte
- 30: Schwenkglieder
- 31: Fahrzeugquerachse, Schwenkachse
- 32: Fahrzeugboden
- 33: Sitzanordnung
- 34: Kofferraum
- 35: Heckoberfläche
- 36: Verdeckkastendeckel
- A, A': Gelenkverbindungsachse
- B, B': Gelenkverbindungsachse
- C, C': Gelenkverbindungsachse
- D, D': Gelenkverbindungsachse

## Patentansprüche

1. Hardtop-Verdeck eines Cabriolet-Fahrzeugs (2) mit einem Heck-Dachsegment (3) und einem in Verdeckschließstellung zwischen diesem und einem Windschutzscheibenrahmen (8) angeordneten Front-Dachsegment (4), wobei das Heck-Dachsegment (3) gelenkig mit einer Fahrzeugkarosserie und mit dem Front-Dachsegment (4) verbunden ist, und wobei bei einer Überführung von einer Verdeckschließstellung in eine Verdecköffnungsstellung das Heck-Dachsegment (3) um seinen heckseitigen Rand (3A) hochverschwenkt wird, das Front-Dachsegment (4) um seinen an das Heck-Dachsegment (3) grenzenden Rand (4A) herabgeklappt wird und die Dachsegmente (3, 4) zusammen heckwärts derart in eine abgesenkte Position verlagert werden, dass das Front-Dachsegment (4) in Verdecköffnungsstellung im Wesentlichen senkrecht mit seinem dem Heck-Dachsegment (3) abgewandten Rand (4B) entgegen einem Fahrzeugboden (32) hinter einer Sitzanordnung (33) angeordnet ist und das Heck-Dachsegment (3) im Wesentlichen waagrecht und heckwärts des Front-Dachsegments (4) ausgerichtet angeordnet ist, wobei die somit L-förmig angeordneten Dachsegmente (3, 4) eine fahrzeugfrontseitige und obere Begrenzung eines Kofferraums (3, 4) bilden,
**dadurch gekennzeichnet,**
**dass** eine Oberseite des Heck-Dachsegments (3) bei dessen Positionierung in Verdecköffnungsstellung Teil einer Heckoberfläche (35) ist.

2. Hardtop-Verdeck nach Anspruch 1,
**dadurch gekennzeichnet,**
**dass** das Heck-Dachsegment (3) in Verdecköffnungsstellung waagrecht wenigstens annähernd in Fahrzeugbrüstungshöhe angeordnet ist.

3. Hardtop-Verdeck nach einem der Ansprüche 1 oder 2,
**dadurch gekennzeichnet,**
**dass** das Heck-Dachsegment (3) mit der Fahrzeugkarosserie über einen Mehrgelenk-Mechanismus (6) verbunden ist.

4. Hardtop-Verdeck nach einem der Ansprüche 1 bis 3,
**dadurch gekennzeichnet,**
**dass** das Heck-Dachsegment (3) mit dem Front-Dachsegment (4) über eine Scharnierverbindung (9) verbunden ist.

5. Hardtop-Verdeck nach einem der Ansprüche 1 bis 4,
**dadurch gekennzeichnet,**
**dass** eine Antriebseinrichtung mit einem das Heck-Dachsegment und das Front-Dachsegment gemeinsam antreibenden Antriebsorgan vorgesehen ist.

6. Hardtop-Verdeck nach einem der Ansprüche 1 bis 4,
**dadurch gekennzeichnet,**
**dass** eine Antriebseinrichtung (11) ein erstes, dem Heck-Dachsegment (3) zugeordnetes Antriebsorgan (12) und ein zweites, dem Front-Dachsegment (4)zugeordnetes Antriebsorgan (13) aufweist.

7. Hardtop-Verdeck nach einem der Ansprüche 1 bis 6,
**dadurch gekennzeichnet,**
**dass** die Dachsegmente (3, 4) zur Bedeckung eines zweisitzigen Fahrgastraumes ausgelegt sind.

8. Hardtop-Verdeck nach einem der Ansprüche 1 bis 7,
**dadurch gekennzeichnet,**
**dass** ein als Verdeckrandabdeckung ausgebildeter Verdeckkastendeckel (36) vorgesehen ist, welcher vor Einleitung einer Öffnungsbewegung der Dachsegmente (3, 4) hochverschwenkt und nach Beendigung der Öffnungsbewegung der Dachsegmente (3, 4) zurückverschwenkt wird, wobei der Verdeckkastendeckel (36) in Verdecköffnungsstellung mit der Oberseite des Heck-Dachsegments (3) die Heckoberfläche (35) bildet.

## Claims

1. A hardtop folding top of a cabriolet vehicle (2) with a rear roof segment (3) and a front roof segment (4) arranged, in the folding top closed position, between the rear roof segment (3) and a windscreen frame (8), whereby the rear roof segment (3) is connected in a hinged manner to a vehicle car body and to the front roof segment (4), and whereby, in a transition from a folding top closed position into a folding top open position, the rear roof segment (3) is pivoted up around its rear-side edge (3A), the front segment (4) is folded down around its edge (4A) which borders on the rear roof segment (3) and the roof segments (3, 4) are rearwardly displaced together into a lowered position, such that the front roof segment (4), in the folding top open position, is arranged substantially perpendicularly with its edge (4B) facing away from the rear roof segment (3) against a vehicle floor (32) behind a seat arrangement (33) and the rear roof segment (3) is arranged so as to be orientated substantially horizontally and to the rear of the front roof segment (4), whereby the roof segments (3, 4), thus arranged in an L-shaped manner, form a boundary of a boot (3, 4) at the vehicle front side and at the top,
**characterised in that**
an upper side of the rear roof segment (3), when it is positioned in the folding top open position, forms part of a rear surface (35).

2. The hardtop folding top according to Claim 1,
**characterised in that**
the rear roof segment (3), in the folding top open position, is arranged horizontally, at least approximately at the height of the vehicle parapet.

3. The hardtop folding top according to one of Claims 1 or 2,
**characterised in that**
the rear roof segment (3) is connected to the vehicle car body via a multiple hinge mechanism (6).

4. The hardtop folding top according to one of Claims 1 to 3,
**characterised in that**
the rear roof segment (3) is connected to the front roof segment (4) via an articulated connection (9).

5. The hardtop folding top according to one of Claims 1 to 4,
**characterised in that**
a drive device is provided with a drive member driving the rear roof segment and the front roof segment jointly.

6. The hardtop folding top according to one of Claims 1 to 4,
**characterised in that**
a drive device (11) has a first drive member (12) associated with the rear roof segment (3) and a second drive member (13) associated with the front roof segment (4).

7. The hardtop folding top according to one of Claims 1 to 6,
**characterised in that**
the roof segments (3, 4) are designed for covering a two-seater passenger space.

8. The hardtop folding top according to one of Claims 1 to 7,
**characterised in that**
a folding top compartment cover (36) formed as a folding top edge cover is provided which, before the initiation of an opening movement for the roof segments (3, 4), is pivoted upwards and, after termination of the opening movement for the roof segments (3, 4), is pivoted back, whereby the folding top compartment cover (36), in the folding top open position, forms the rear surface (35) with the upper side of the rear roof segment (3).

## Revendications

1. Toit rigide escamotable d'un véhicule cabriolet (2) avec un segment de toit arrière (3) et un segment de toit avant (4) disposé entre ce dernier et un cadre de pare-brise (8) en position de fermeture du toit, le segment de toit arrière (3) étant raccordé de manière articulée à une carrosserie de véhicule et au segment de toit avant (4), et, lors du passage d'une position de fermeture du toit dans une position d'ouverture du toit , le segment de toit arrière (3) étant pivoté vers le haut sur son bord latéral arrière (3A), le segment de toit avant (4) étant replié vers le bas sur son bord (4A) attenant au segment de toit arrière (3) et les segments de toit (3, 4) étant placés conjointement à l'arrière dans une position abaissée, de sorte que, en position d'ouverture du toit, le segment de toit avant (4) est disposé essentiellement verticalement avec son bord (4B) opposé au segment de toit arrière (3) à l'encontre du plancher du véhicule (32) derrière un emplacement de siège (33) et le segment de toit arrière (3) est disposé avec une orientation essentiellement horizontale et à l'arrière du segment de toit avant (4), les segments de toit (3, 4) disposés par conséquent en forme de L constituant une délimitation latérale avant du véhicule et supérieure d'un coffre à bagages (3, 4),
**caractérisé en ce**
**qu'**un côté supérieur du segment de toit arrière (3), lorsqu'il est en position d'ouverture du toit, est une partie d'une surface arrière (35).

2. Toit rigide escamotable selon la revendication 1,
**caractérisé en ce que**
le segment de toit arrière (3) en position d'ouverture du toit est disposé horizontalement au moins approximativement à hauteur de la ceinture de caisse du véhicule.

3. Toit rigide escamotable selon la revendication 1 ou 2,
**caractérisé en ce que**
le segment de toit arrière (3) est raccordé à la carrosserie du véhicule automobile par le biais d'un mécanisme à articulations multiples (6).

4. Toit rigide escamotable selon l'une des revendications 1 à 3,
**caractérisé en ce que**
le segment de toit arrière (3) est raccordé au segment de toit avant (4) par le biais d'une liaison à charnière (9).

5. Toit rigide escamotable selon l'une des revendications 1 à 4,
**caractérisé en ce**
**qu'**il est prévu un système d'entraînement avec un organe d'entraînement entraînant conjointement le segment de toit arrière et le segment de toit avant.

6. Toit rigide escamotable selon l'une des revendications 1 à 4,
**caractérisé en ce**
**qu'**un système d'entraînement (11) présente un premier organe d'entraînement (12) associé au segment de toit arrière (3) et un second organe d'entraînement (13) associé au segment de toit avant (4).

7. Toit rigide escamotable selon l'une des revendications 1 à 6,
**caractérisé en ce que**
les segments de toit (3, 4) sont conçus pour le recouvrement d'un habitacle à deux places.

8. Toit rigide escamotable selon l'une des revendications 1 à 7,
**caractérisé en ce**
**qu'**il est prévu un couvercle de logement de toit (36) développé sous la forme d'un recouvrement de bord de toit et qui est pivoté en hauteur avant l'introduction d'un mouvement d'ouverture des segments de toit (3, 4) et qui revient par pivotement à la fin du mouvement d'ouverture des segments de toit (3, 4), en position d'ouverture de toit le couvercle de logement de toit (36) formant avec le côté supérieur du segment de toit arrière (3) la surface arrière (35).
